# EUROPÄISCHE PATENTSCHRIFT

(11) **EP 4 471 738 B1**
(45) Veröffentlichungstag und Bekanntmachung des Hinweises auf die Patenterteilung: **29.04.2026**
(21) Anmeldenummer: 24200826.6
(22) Anmeldetag: 15.05.2018
(51) Int. Cl.: G07D 11/00, G07D 11/12, G07D 11/40, G07D 11/165, G07D 11/10

(54) **BEFÜLLEN VON WERTDOKUMENTKASSETTEN**
FILLING OF VALUABLE DOCUMENT CASSETTES
REMPLISSAGE DE CASSETTES DE DOCUMENTS DE VALEUR

(30) Priorität: 15.05.2017 DE 102017004641
(43) Veröffentlichungstag der Anmeldung: 04.12.2024
(62) Teilanmeldung aus: 18726051.8
(73) Patentinhaber: Giesecke+Devrient Currency Technology GmbH, 81677 München (DE)
(72) Erfinder: Sperl, Markus, 81677 München (DE); Jakobs, Andreas, 81677 München (DE); Königer, Wolfgang, 81677 München (DE); Knickrehm, Michael, 81677 München (DE)
(74) Vertreter: Giesecke+Devrient IP

(56) Entgegenhaltungen:
- US-A- 5 101 979

## Beschreibung

Die Erfindung betrifft eine Vorrichtung und ein Verfahren zum Befüllen von Wertdokumentkassetten mit Wertdokumenten.

Bei der Bearbeitung von Banknoten und anderen Wertdokumenten kommen stabile Wertdokumentkassetten zum Einsatz, um die Wertdokumente beispielsweise für einen sicheren Transport aufzunehmen. Wertdokumentkassetten sind für die automatische Entnahme von Wertdokumenten in einem Selbstbedienungsgerät ausgebildet. Bei den Wertdokumentkassetten kann es sich um Kassetten für Banknoten handeln, es können aber auch andere Wertdokumente in solchen Kassetten aufbewahrt werden, wie z.B. Gutscheine, Tickets, Schecks, o.ä.

Die bekannten Kassetten für Banknoten können in Selbstbedienungsgeräten eingesetzt werden, welche dazu ausgestaltet sind, die Banknoten automatisch aus den Kassetten zu entnehmen. Bei derartigen Selbstbedienungsgeräten kann es sich beispielsweise um Geldautomaten (ATM) handeln, die einen bestimmten Betrag an eine Bedienperson auszahlen und den ausgezahlten Betrag einem Konto der Bedienperson belasten. Dieser Betrag wird dann aus Banknoten zusammengesetzt, die aus den im Geldausgabeautomaten enthaltenen Kassetten entnommen und an die Bedienperson ausgegeben werden. Dabei ist es üblich, dass für jede Denomination mindestens eine eigene Kassette verwendet wird. Die Selbstbedienungsgeräte können auch dazu eingerichtet sein, Banknoten, die von einer Bedienperson eingegeben werden, anzunehmen und in einer oder mehreren Kassetten abzulegen sowie einen dabei festgestellten Betrag dem Konto der Bedienperson gutzuschreiben.

Wenn die Kassetten eines Selbstbedienungsgeräts aufgrund der Auszahlungen mit der Zeit leer werden, müssen diese durch andere, mit Banknoten der jeweiligen Denomination gefüllte Kassetten ersetzt werden. Dazu werden entleerte oder teilweise entleerte Kassetten aus den Selbstbedienungsgeräten entnommen und anschließend wieder mit Banknoten befüllt, damit sie erneut in einem Selbstbedienungsgerät verwendet werden können. Relevanter Stand der Technik kann in der US5101979A gefunden werden. Dieses Dokument offenbart eine Vorrichtung, umfassend eine Behälter-Aufnahmeeinrichtung zur Aufnahme mindestens eines Wertdokumentbehälters, eine Greifeinrichtung zum Greifen eines Wertdokumentstapels, eine Transporteinrichtung zum Bewegen der Greifeinrichtung, die dazu ausgebildet ist, einen Wertdokumentstapel mit Hilfe der Greifeinrichtung aus einem in der Behälter-Aufnahmeeinrichtung aufgenommenen Wertdokumentbehälter zu entnehmen, ein, vorzugsweise verschließbares, Gehäuse, in dem die Behälter-Aufnahmeeinrichtung, und die Greifeinrichtung angeordnet sind, eine Steuereinrichtung zur Steuerung der Vorrichtung, insbesondere zur Steuerung der Transporteinrichtung und der Greifeinrichtung, die dazu ausgebildet ist, einen Wertdokumentstapel mit Hilfe der Greifeinrichtung aus einem in der Behälter-Aufnahmeeinrichtung auf genommenen Wertdokumentbehälter zu entnehmen.

Bisher werden Wertdokumentkassetten üblicherweise manuell befüllt. Darüber hinaus wurde vorgeschlagen, Wertdokumentkassetten mit Hilfe einer Wertdokumentbearbeitungsvorrichtung vollautomatisch zu befüllen, wobei in einer Sortiervorrichtung für Banknoten die Ausgabe der Banknoten derselben Denomination direkt in eine Kassette erfolgt. Die Kassette wird dazu an Stelle des üblichen Ausgabefachs am Ende der Transportstrecke der Sortiervorrichtung positioniert und dort ohne manuelles Eingreifen befüllt.

Nachteilig ist dabei, dass die Wertdokumente, die an der Ausgabe der Sortiervorrichtung ankommen, aufgrund geringfügiger unterschiedlicher Transportvorgänge nicht alle dieselbe Ausrichtung haben. Wird aus diesen Wertdokumenten automatisch ein Wertdokumentstapel gebildet und in eine Wertdokumentkassette eingelegt, so ergibt sich das Problem, dass bei diesem die Kanten der Wertdokumente nicht genau übereinander liegen. Wenn diese Wertdokumente später, z.B. in einem Selbstbedienungsgerät, automatisch aus der Wertdokumentkassette entnommen werden sollen, können manche Wertdokumente, deren Lage stark abweicht, nicht automatisch aus der Kassette entnommen werden.

Der Erfindung liegt daher die Aufgabe zugrunde, eine Vorrichtung zum Befüllen von Wertdokumentkassetten bereitzustellen, die es erlaubt Wertdokumentkassetten automatisch mit Wertdokumentstapeln zu befüllen.

Diese Aufgabe wird erfindungsgemäß durch den Gegenstand des Anspruchs 1 gelöst. Ein entsprechendes Verfahren ist Gegenstand des abhängigen Verfahrensanspruchs. Vorteilhafte Weiterbildungen der Erfindung sind in den Unteransprüchen angegeben.

Bei der Wertdokumentbearbeitung ist es üblich, die Wertdokumente, bevor sie in eine Sortiervorrichtung gelangen oder nachdem sie aus einer Sortiervorrichtung entnommen wurden, in Wertdokumentbehältern zu transportieren, die - im Unterschied zu Wertdokumentkassetten - nicht für die automatische Entnahme von Wertdokumenten in einem Selbstbedienungsgerät ausgebildet sind. Beispielsweise werden Banknoten in einem Cashcenter in Wertdokumentbehältern aufbewahrt und transportiert, die an ihrer Oberseite offen sind, um die Wertdokumente einfach - manuell oder automatisch - darin einlegen und daraus entnehmen zu können. Die in solchen Wertdokumentbehältern enthaltenen Wertdokumente können zur Befüllung von Wertdokumentkassetten verwendet werden.

Die erfindungsgemäße Vorrichtung weist eine Kassetten-Aufnahmeeinrichtung zur Aufnahme einer Wertdokumentkassette auf, die mit den Wertdokumenten aus einem Wertdokumentbehälter befüllt werden soll. Die Kassetten-Aufnahmeeinrichtung kann so ausgebildet sein, dass die Wertdokumentkassette darin horizontal liegt. Sie kann aber auch so ausgebildet sein, dass die Wertdokumentkassette darin vertikal steht oder schräg nach hinten geneigt ist.

Die Vorrichtung weist auch eine Behälter-Aufnahmeeinrichtung zur Aufnahme mindestens eines Wertdokumentbehälters auf, in die ein Wertdokumentbehälter zur Entnahme von Wertdokumenten eingebracht werden kann und von der der jeweilige Wertdokumentbehälter nach dem Entnahme der Wertdokumente entnommen werden kann.

Außerdem weist die Vorrichtung eine Greifeinrichtung auf, die zum Transportieren eines Wertdokumentstapels aus dem Wertdokumentbehälter in die Wertdokumentkassette eingerichtet ist. Die Greifeinrichtung zum Greifen von Wertdokumentstapeln ist dazu ausgebildet, einen Wertdokumentstapel zu greifen und wieder abzulegen. Die Greifeinrichtung weist z.B. zwei Greifelemente auf, die aufeinander zu bewegt werden können, um einen Wertdokumentstapel zu greifen.

Optional weist die Vorrichtung eine Formatiereinrichtung zum automatischen Ausrichten eines aus dem Wertdokumentbehälter entnommenen Wertdokumentstapels auf, bevor dieser in die Wertdokumentkassette eingelegt wird.

Die Vorrichtung weist außerdem Folgendes auf:
- eine Transporteinrichtung, mit deren Hilfe die Greifeinrichtung bewegt werden kann, insbesondere vertikal und horizontal bewegt werden kann, um einen Wertdokumentstapel aus dem Wertdokumentbehälter zu entnehmen und zu der Wertdokumentkassette zu transportieren und in diese einzulegen, wobei der entnommene Wertdokumentstapel optional zu der Formatiereinrichtung und von der Formatiereinrichtung zu der Wertdokumentkassette zu transportiert werden kann, sofern eine Ausrichtung des entnommenen Wertdokumentstapels erforderlich oder gewünscht ist.
- eine Steuereinrichtung zur Steuerung der Vorrichtung, insbesondere der Transporteinrichtung und der Greifeinrichtung, die dazu ausgebildet ist, einen Wertdokumentstapel mit Hilfe die Greifeinrichtung aus einem in der Behälter-Aufnahmeeinrichtung aufgenommenen Wertdokumentbehälter zu entnehmen, diesen mit Hilfe die Greifeinrichtung ggf. in die Formatiereinrichtung einzulegen und (nach dem automatischen Formatieren des Wertdokumentstapels in der Formatiereinrichtung) mit Hilfe die Greifeinrichtung aus der Formatiereinrichtung zu entnehmen und mit Hilfe der Greiffeinrichtung in eine in der Kassetten-Aufnahmeeinrichtung aufgenommene Wertdokumentkassette einzulegen. Die Steuereinrichtung ist, falls jeweils vorhanden, auch zur Steuerung der Formatiereinrichtung und/oder eines nachfolgend näher beschriebenen Fingerelements und/oder eines nachfolgend näher beschriebenen Niederhalters ausgebildet.

Im Gegensatz zum vollautomatischen Befüllen der Wertdokumentkassetten durch eine Wertdokumentsortiervorrichtung, wird durch die erfindungsgemäße Vorrichtung eine Entkopplung des Kassetten-Befüllvorgangs von dem Sortiervorgang der Wertdokumente erreicht. Denn die Wertdokumente werden nicht direkt in eine Wertdokumentkassette eingestapelt, sondern zunächst in einen Wertdokumentbehälter abgestapelt und erst anschließend aus diesem mittels eines Greifers entnommen und in eine Wertdokumentkassette eingelegt. Dadurch können die Wertdokumentkassetten flexibler und bedarfsgerechter befüllt werden. Bei Bedarf kann mit Hilfe der Formatiereinrichtung zudem eine Ausrichtung der Wertdokumentstapel durchgeführt werden.

Optional kann die Steuereinrichtung der Vorrichtung auch zur Steuerung der Formatiereinrichtung und zum Steuern des Öffnens und Schließens eines Fensters der Vorrichtung ausgebildet sein. Diese können aber auch anderweitig gesteuert werden. Die Formatiereinrichtung kann z.B. einen Sensor aufweisen, um das Einlegen eines Wertdokumentstapels zu detektieren und das Ausrichten desselben automatisch zu starten. Das Öffnen und Schließen des Fensters kann auch manuell oder per Knopfdruck durch die Bedienperson erfolgen.

In dem Wertdokumentbehälter, aus dem die Wertdokumentstapel entnommen werden, sind einer oder mehrere Wertdokumentstapel enthalten. Beispielsweise sind in dem Wertdokumentbehälter mehrere Wertdokumentstapel durch Trennelemente so voneinander getrennt, dass sie durch die Greifeinrichtung getrennt voneinander aus dem Wertdokumentbehälter entnehmbar sind. Der Wertdokumentbehälter kann horizontal oder vertikal oder schräg in der Vorrichtung angeordnet sein.

Die Behälter-Aufnahmeeinrichtung ist z.B. zur Aufnahme mindestens zweier Wertdokumentbehälter ausgebildet, die nebeneinander liegend von der Behälter-Aufnahmeeinrichtung aufgenommen werden. Beispielsweise kann die Behälter-Aufnahmeeinrichtung einen mechanischen Verdrehschutz aufweisen, der dafür sorgt, dass die Wertdokumentbehälter nur in einer vorbestimmten Orientierung von der Aufnahmeeinrichtung aufgenommen werden können. Die Wertdokumentbehälter sind dann zu diesem Zweck (an ihrer Unterseite oder Seitenwand) entsprechend asymmetrisch geformt, dass sie nur in der vorbestimmten Orientierung von der Aufnahmeeinrichtung aufgenommen werden können. Der Wertdokumentbehälter kann ortsfest sein, während die Wertdokumentstapel aus dem Wertdokumentbehälter entnommen werden. Alternativ kann der Wertdokumentbehälter auch bewegt werden, während die Wertdokumentstapel aus dem Wertdokumentbehälter entnommen werden.

Vorzugsweise weist die Vorrichtung zusätzlich zu der Greifeinrichtung ein Fingerelement auf, das z.B. an der Transporteinrichtung der Greifeinrichtung oder an der Kassetten-Aufnahmeeinrichtung angebracht sein kann. Das Fingerelement wird vor dem Einlegen der Wertdokumente mit Hilfe einer Verfahreinrichtung in die Wertdokumentkassette eingeführt , die an der Transporteinrichtung der Greifeinrichtung oder an der Kassetten-Aufnahmeeinrichtung befestigt sein kann. Mittels der Verfahreinrichtung kann das Fingerelement unabhängig von der Greifeinrichtung in die Wertdokumentkassette bewegt werden . So kann das Fingerelement unabhängig von der Greifeinrichtung in die Wertdokumentkassette eingeführt werden.

Das Fingerelement wird vorzugsweise in die Wertdokumentkassette eingeführt, bevor die Greifeinrichtung in die Wertdokumentkassette eingeführt wird, um den in der Kassette bereits befindlichen Wertdokumentstapel durch das Fingerelement zu halten oder zu stützen und ggf. auch um diesen entgegen der Stapelrichtung zusammenzudrücken. Zum Beispiel wird das Fingerelement so in die Wertdokumentkassette eingeführt, dass es am Ende des in der Wertdokumentkassette befindlichen Wertdokumentstapels angeordnet wird, so dass das Fingerelement die Oberseite des stapelobersten Wertdokuments des in der Wertdokumentkassette bereits befindlichen Wertdokumentstapels flächig berührt. Das Fingerelement kann einteilig sein oder zwei oder mehrere Einzelelemente aufweisen.

Das Fingerelement weist z.B. zwei sichelförmige Einzelelemente auf, die an gegenüber liegenden Seiten seitlich an der Kassetten-Aufnahmeeinrichtung angebracht sind und von außen in eine Wertdokumentkassette hinein schwenkbar sind, die in der Kassetten-Aufnahmeeinrichtung aufgenommen ist. Alternativ kann das Fingerelement an der Transporteinrichtung der Greifeinrichtung angebracht sein, so dass es mit der Bewegung der Transporteinrichtung mitbewegt wird.

Die Kassetten-Aufnahmeeinrichtung kann ein Stützelement zum Stützen oder Halten des in der Wertdokumentkassette befindlichen Wertdokumentstapels aufweisen, um die Stapelform des Wertdokumentstapels beim Transport der Wertdokumentkassette sicher zu erhalten. Insbesondere kann das Stützelement als Schieber ausgebildet sein, der gegen den in der Wertdokumentkassette befindlichen Wertdokumentstapel gedrückt wird.

Zum Einlegen eines Wertdokumentstapels in die Kassette kann die Haltefunktion des Stützelements zeitweise durch das Fingerelement übernommen werden. In der Zeit, in der das Fingerelement diese Haltefunktion übernimmt, kann das Stützelement zeitweise von dem in der Kassette befindlichen Wertdokumentstapels entfernt werden, um das Einlegen eines neuen Wertdokumentstapels zu ermöglichen. Nach dem Einlegen des neuen Wertdokumentstapels in die Kassette wird das Stützelement wieder an das stapeloberste Blatt des Wertdokumentstapels herangefahren und übernimmt diese Haltefunktion wieder von dem Fingerelement.

Bei einer Kassettenaufnahmeeinrichtung mit Stützelement wird das Fingerelement bevorzugt so in die Wertdokumentkassette eingeführt, dass es am Ende des in der Wertdokumentkassette befindlichen Wertdokumentstapels neben dem Stützelement positioniert wird. Beispielsweise weist das Fingerelement mindestens zwei Einzelfinger auf, die miteinander durch die Verfahreinrichtung bewegt werden. Beim Einführen des Fingerelements in die Wertdokumentkassette wird der Schieber zwischen den Einzelfingern des Fingerelements angeordnet.

Das Fingerelement wird mit Hilfe der Verfahreinrichtung in die Wertdokumentkassette zu einem Zeitpunkt eingeführt, bevor die Greifeinrichtung zum Einlegen eines Wertdokumentstapel in die Wertdokumentkassette eingeführt wird. Dies ist z.B. vorteilhaft, wenn sich der vorhandene Wertdokumentstapel aufbauscht, da der sich aufbauschende Wertdokumentstapel mit dem Fingerelement zusammengedrückt werden kann. Das Fingerelement wird insbesondere erst dann wieder aus der Wertdokumentkassette heraus gezogen, wenn die Greifelemente der Greifeinrichtung bei ihrem Herausbewegen aus der Wertdokumentkassette den Wertdokumentstapel bereits nicht mehr berühren. Das Fingerelement kann alternativ aber auch gleichzeitig mit den Greifelementen der Greifeinrichtung oder vor diesen aus der Wertdokumentkassette heraus gezogen werden.

Die Vorrichtung ist dazu ausgebildet ist, dass der jeweilige Wertdokumentstapel durch den Greifer entlang einer Richtung parallel zur Oberfläche der Wertdokumente des Wertdokumentstapels in die Kassette eingebracht wird, im Gegensatz zum üblichen Einstempeln eines Wertdokumentstapels in eine Kassette, bei dem die Wertdokumentstapel entlang einer Richtung senkrecht zur Wertdokumentoberfläche in die Wertdokumentkassette bewegt werden.

Die Formatiereinrichtung ist zur Aufnahme jeweils eines Wertdokumentstapels ausgebildet ist, der durch den Greifer aus dem Wertdokumentbehälter entnommen wurde. Insbesondere weist die Formatiereinrichtung einen Boden auf, auf den der zu formatierende Wertdokumentstapel aufliegt, wobei die Wertdokumente des in der Formatiereinrichtung aufgenommenen Wertdokumentstapels mit ihren Kanten, vorzugsweise mit ihren Längskanten, auf dem Boden der Formatiereinrichtung stehen. Zum Beispiel ist die Formatiereinrichtung an ihrer dem Boden gegenüberliegenden Oberseite offen, um den jeweiligen Wertdokumentstapel von der Oberseite der Formatiereinrichtung in die Formatiereinrichtung einlegen und entnehmen zu können. Der Boden der Formatiereinrichtung kann horizontal oder schräg zur Horizontalen ausgerichtet sein.

In einem Ausführungsbeispiel weist die Formatiereinrichtung zum Formatieren des Wertdokumentstapels zwei einander gegenüberliegende bewegliche Seitenwände auf, die gleichzeitig auf einen in der Formatiereinrichtung eingelegten Wertdokumentstapel zu bewegt werden, um den Wertdokumentstapel zu formatieren. Beim Formatieren des Wertdokumentstapels werden die Positionen der Seitenkanten der Wertdokumente des Wertdokumentstapels aneinander angeglichen bzw. aufeinander ausgerichtet. Wenn es sich um Wertdokumente derselben Größe handelt, liegen alle Seitenkanten der Wertdokumente des jeweiligen Wertdokumentstapels nach dem Formatieren bündig zueinander. Zum Formatieren werden die einander gegenüberliegenden beweglichen Seitenwände der Formatiereinrichtung einmal oder mehrmals auf die einander gegenüberliegenden Seitenkanten der Wertdokumente des Wertdokumentstapels zu- und von diesen wieder wegbewegt, um hervorstehende Seitenkanten der Wertdokumente des Wertdokumentstapels zu verschieben und so deren Positionen aneinander anzugleichen. Die Formatiereinrichtung ist in der Vorrichtung z.B. zwischen der Behälter-Aufnahmeeinrichtung und der Kassetten-Aufnahmeeinrichtung angeordnet.

Die Behälter-Aufnahmeeinrichtung, die Kassetten-Aufnahmeeinrichtung und die Formatiereinrichtung sind z.B. ortsfest und unmittelbar nebeneinander angeordnet. Vorzugsweise sind der in der Behälter-Aufnahmeeinrichtung aufgenommene Wertdokumentbehälter, die in der Kassetten-Aufnahmeeinrichtung aufgenommene Wertdokumentkassette und die optional vorhandene Formatiereinrichtung jeweils an ihrer Oberseite offen, um Wertdokumentstapel durch die Greifeinrichtung von oben aus diesen zu entnehmen bzw. von oben in diese einzulegen. Die Greifeinrichtung ist dann über der Anordnung aus Behälter-Aufnahmeeinrichtung, Kassetten-Aufnahmeeinrichtung und ggf. Formatiereinrichtung angeordnet und wird über diesen bewegt.

Die Vorrichtung weist ein verschließbares Gehäuse auf, in dem die Behälter-Aufnahmeeinrichtung, die Kassetten-Aufnahmeeinrichtung, die Greifeinrichtung und ggf. die Formatiereinrichtung angeordnet sind. Das Gehäuse bildet einen geschützten Raum, der manipulationssicher abschließbar ist. Das verschließbare Gehäuse kann an seinem einer Bedienperson zugewandten Seite ein durchsichtiges Fenster aufweisen, das zum Einbringen und zur Entnahme von Wertdokumentbehältern und der Wertdokumentkassette manuell oder automatisch öffenbar und schließbar ist. Das Öffnen der Wertdokumentbehälter und die Entnahme der Wertdokumente aus dem Wertdokumentbehälter durch die Greifeinrichtung erfolgt vorzugsweise erst, nachdem das Gehäuse mit dem Fenster verschlossen wurde. Das Öffnen des Fensters erfolgt erst, nachdem die mit Wertdokumenten befüllte Wertdokumentkassette verschlossen wurde.

Optional weist die Vorrichtung auch eine Einrichtung auf, die zum Öffnen und/oder zum Schließen der Wertdokumentbehälter ausgebildet ist, aus dem die Wertdokumentstapel entnommen werden. Zum Beispiel ist die Einrichtung zum Abnehmen und Entriegeln und/ oder zum Aufsetzen und Verriegeln eines Deckels des Wertdokumentbehälters ausgebildet. Der Deckel kann z.B. mittels eines Saugnapfs gefasst und von dem Behälter abgenommen bzw. auf diesen aufgesetzt werden.

Für mehrere Wertdokumentstapel, die in demselben Wertdokumentbehälter enthalten sind, führt die Greifeinrichtung nacheinander jeweils folgende Schritte durch:
a) Entnehmen des jeweiligen Wertdokumentstapels aus dem in einer Behälter-Aufnahmeeinrichtung aufgenommenen Wertdokumentbehälter,
b) optional Einlegen des jeweiligen Wertdokumentstapels in die Formatiereinrichtung und Entnehmen des in der Formatiereinrichtung eingelegten Wertdokumentstapels nachdem dieser automatisch formatiert wurde,
c) Einlegen des (ggf. formatierten) entnommenen Wertdokumentstapels in die in der Kassetten-Aufnahmeeinrichtung aufgenommene Wertdokumentkassette mittels der Greifeinrichtung.

Diese Schritte a)-c) werden für mehrere Wertdokumentstapel durchgeführt, die in demselben Wertdokumentbehälter oder in verschiedenen Wertdokumentbehältern enthalten sind. Sobald einer der Wertdokumentbehälter entleert ist, wird mit der Entnahme von Wertdokumentstapeln aus einem anderen Wertdokumentbehälter begonnen, z.B. aus einem neben dem entleerten Behälter in der Behälteraufnahme angeordneten Wertdokumentbehälter oder aus einem nach dem entleerten Wertdokumentbehälter in die Vorrichtung eingebrachten Wertdokumentbehälter.

Wenn die Greifelemente der Greifeinrichtung oder ein zwischen den Wertdokumenten befindliches Fingerelement aus der Wertdokumentkassette herausgezogen werden, besteht die Gefahr, dass Wertdokumente aufgrund der Reibung mit den Greifelementen bzw. mit dem Fingerelement teilweise oder ganz mit aus der Wertdokumentkassette heraus gezogen werden.
a) Um dies zu verhindern kann unmittelbar neben dem Fingerelement bzw. unmittelbar neben den Greifelementen ein Niederhalter angeordnet werden, der die Wertdokumente beim Herausziehen des Fingerelements bzw. der Greifelemente in der Wertdokumentkassette hält. Dazu berührt der Niederhalter beim Herausziehen des Fingerelements bzw. der Greifelemente die Oberkanten zumindest derjenigen in der Wertdokumentkassette befindlichen Wertdokumente, die unmittelbar neben dem Fingerelement bzw. unmittelbar neben den Greifelementen stehen (d.h. sowohl die Oberkanten des oder der obersten Wertdokumente des bereits in der Wertdokumentkassette befindlichen Wertdokumentstapels als auch die Oberkanten des oder der untersten in der Wertdokumentkassette neu eingelegten Wertdokumente). Der Niederhalter ist unabhängig von der Greifeinrichtung bewegbar. Er kann relativ zur Greifeinrichtung angefedert verschiebbar sein, wobei die Federkraft gegen den eingelegten Wertdokumentstapel drückt, oder aktiv bewegbar sein, z.B. pneumatisch oder elektrisch angetrieben.

Der Niederhalter ist an der Transporteinrichtung der Greifeinrichtung angebracht, so dass er mit der Bewegung der Transporteinrichtung mitbewegt wird. Im Vergleich zu einem an der Kassetten-Aufnahme befestigten Niederhalter kann der mitbewegte Niederhalter kleiner sein und flexibler für verschiedene Kassettenformen und Kassettengrößen verwendet werden.

Der Niederhalter bleibt beim Herausziehen des Fingerelements bzw. der Greifelemente ortsfest, bis das Fingerelement bzw. die Greifelemente die Wertdokumente des eingelegten Wertdokumentstapels nicht mehr berühren und wird anschließend ebenfalls von dem eingelegten Wertdokumentstapel entfernt . Beispielsweise ist der Niederhalter senkrecht zur Wertdokumentebene plattenförmig ausgebildet, um die Wertdokumentoberkanten über eine längere Strecke entlang ihrer Kante zu berühren und in der Wertdokumentkassette zurück zu halten. Der Niederhalter kann ein, zwei oder mehr als zwei Niederhalter-Elemente aufweisen, die winkelförmig oder L-förmig sein können. Der Niederhalter ist z.B. an der Verfahreinrichtung des Fingerelements, unmittelbar neben dem Fingerelement angebracht. In einem Ausführungsbeispiel ist der Niederhalter mit dem Fingerelement verbunden. Dabei kann er auf dem Fingerelement gelagert sein und mechanisch so an das Fingerelement gekoppelt sein, dass er automatisch kurz beim Herausziehen der Fingerelements aus der Wertdokumentkassette von dem Fingerelement aus der Wertdokumentkassette herausgezogen wird. In einem anderen Ausführungsbeispiel ist der Niederhalter an der Transporteinrichtung der Greifeinrichtung angebracht, insbesondere unmittelbar neben den Greifelementen.

b) Um das Mitziehen von Wertdokumenten beim Herausziehen des Fingerelements zu verhindern, kann das Fingerelement - alternativ zur Verwendung eines Niederhalters - als Rollenfinger ausgebildet sein. Der Rollenfinger weist mindestens einen Einzelfinger auf, der entlang seiner Längsrichtung zwei Reihen von Rollen aufweist, die sich an den beiden gegenüberliegenden Seiten des jeweiligen Einzelfingers befinden. Bevorzugt werden die Rollen beim Herausziehen des Fingerelements aus der Wertdokumentkassette aktiv gedreht, damit die Rollen auf der Oberfläche der Wertdokumente abrollen. Auf diese Weise wird die beim Herausziehen des Fingerelements entstehende Reibungskraft zwischen Fingerelement und den dem Fingerelement benachbarten Wertdokumenten stark reduziert. Alternativ zu angetriebenen Rollen könnten auch freilaufende, kugelgelagerte Rollen verwendet werden.

c) Alternativ zu einem Rollenfinger können auch eines oder beide Greifelemente entsprechend mit zwei Reihen von Rollen ausgestattet sein, die sich an den beiden gegenüberliegenden Seiten des jeweiligen Greifelements befinden. Bevorzugt werden die Rollen dann beim Herausziehen des Greifelements aus der Wertdokumentkassette aktiv gedreht, damit die Rollen auf der Oberfläche der Wertdokumente abrollen.

d) Alternativ oder zusätzlich kann auch die Oberfläche des Fingerelements ein besonders reibungsarmes Material aufweisen und so das Mitherausziehen von Wertdokumenten aus der Kassette verhindert werden.

Weitere Details zur vorliegenden Erfindung ergeben sich aus der nachfolgenden Beschreibung in Zusammenhang mit den Figuren. Es zeigen
Fig. 1 Ein Ausführungsbeispiel für eine Vorrichtung zum Befüllen von Wertdokumentkassetten mit Wertdokumenten,
Fig. 2a-h schrittweise das Einlegen eines Wertdokumentstapels in eine Wertdokumentkassette von oben mit Hilfe der Greifeinrichtung und unter Verwendung eines Fingerelements,
Fig. 3a-g den Vorgang des Formatierens eines Wertdokumentstapels mit Hilfe einer Formatiereinrichtung,
Fig. 4a-b Beispiel eines als Rollenfinger ausgebildeten Fingerelements,
Fig. 5a-d schrittweise das Einlegen eines Wertdokumentstapels von der Seite in eine vertikal angeordnete Wertdokumentkassette unter Verwendung eines Fingerelements und eines Niederhalters,
Fig. 6a-e schrittweise das Einlegen eines Wertdokumentstapels in eine Wertdokumentkassette von oben unter Verwendung eines Fingerelements und eines Niederhalters,
Fig. 7 das Einlegen eines Wertdokumentstapels in einen schräg nach hinten geneigte Wertdokumentkassette,
Fig. 8 weiteres Ausführungsbeispiel für eine Formatiereinrichtung.

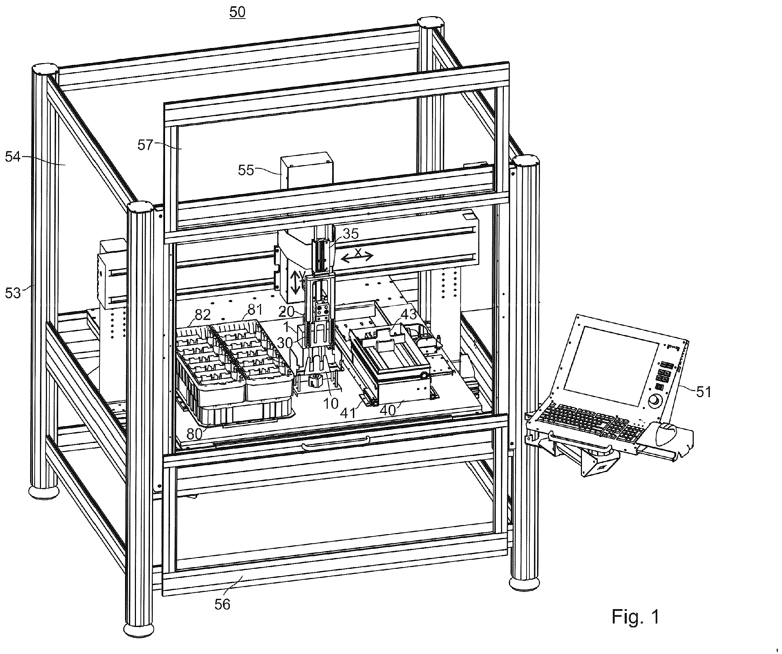

In Fig. 1 ist ein Beispiel einer Vorrichtung 50 zum automatischen Befüllen einer Wertdokumentkassette 40 gezeigt. Die Vorrichtung 50 weist ein verschließbares Gehäuse 53 auf, in dem das automatische Befüllen einer Wertdokumentkassette 40 durchgeführt wird und in dem eine Behälter-Aufnahmeeinrichtung 80, eine Kassetten-Aufnahmeeinrichtung 41 für eine Wertdokumentkassette 40, eine Formatiereinrichtung 10 und eine Greifeinrichtung 20 zum Greifen eines Wertdokumentstapels 1 angeordnet sind. Die Kassetten-Aufnahmeeinrichtung wird durch ggf. verstellbare Rahmenelemente 41 gebildet, die die Wertdokumentkassette 40 an mehreren Seiten der Kassette berühren. Die Position der Rahmenelemente 41 wird entsprechend den Außenmaßen der zu befüllenden Wertdokumentkassette 40 gewählt. Zum Einbringen der Wertdokumentstapel 1 wird eine Seitenwand der Kassette 40 geöffnet.

Das Gehäuse 53 der Vorrichtung 50 weist eine Rückwand sowie zwei durchsichtige Seitenwände 54 auf und ein aus zwei Teilen 56, 57 bestehendes öffenbares Fenster, das zum Einbringen der Wertdokumentbehälter 81, 82 und der Wertdokumentkassette 40 geöffnet wird. Vor Beginn des Befüllvorgangs wird das Fenster 56, 57 geschlossen, so dass das Gehäuse 53 einen geschützten manipulationssicheren Raum für den automatischen Befüllvorgang bildet, der durch das Fenster 56, 57 von außen beobachtbar ist.

Die Wertdokumente werden in Wertdokumentbehältern 81, 82 angeliefert, die manuell oder automatisch in das Innere der Vorrichtung 50 eingebracht werden. Die Wertdokumentbehälter 81, 82 werden auf eine Aufnahme 80 gestellt, die in diesem Beispiel zur Aufnahme von zwei Wertdokumentbehältern ausgebildet ist. Die Aufnahme 80 weist z.B. zur Form der Wertdokumentbehälter passende Einkerbungen auf. Die Einkerbungen können einen Verdrehschutz bilden und so dafür sorgen, dass die Wertdokumentbehälter nur in der richtigen Orientierung eingelegt werden können. Auch die Kassetten-Aufnahme 41 kann einen Verdrehschutz aufweisen. Gegebenenfalls sind die Wertdokumentbehälter mit einem Deckel verschlossen, der erst nach dem Verschließen der Vorrichtung mittels einer entsprechenden, im Inneren der Vorrichtung befindlichen Einrichtung automatisch abgenommen wird (nicht gezeigt).

Die Vorrichtung weist eine Steuereinrichtung 51 auf, die in diesem Beispiel durch einen Computer gebildet wird, der zugleich eine Bedienerschnittstelle für eine Bedienperson bildet. Die Bedienperson kann den automatischen Befüllvorgang dort starten und ggf. Einstellungen für den automatischen Befüllvorgang ändern. Der Computer ist mit einer entsprechenden Software programmiert, die die Bewegung der Greifeinrichtung 20 zum Entnehmen der Wertdokumentstapel 1 aus den Wertdokumentbehältern 81, 82, zum Transportieren der Wertdokumentstapel in die Formatiereinrichtung 10, zum Entnehmen der Wertdokumentstapel 1 aus der Formatiereinrichtung und Einlegen in die Wertdokumentkassette 40 steuert. Desweiteren steuert die Steuereinrichtung 51 die Bewegung des weiter unten beschriebenen Fingerelements 30.

Beispielsweise werden zuerst nacheinander mehrere Wertdokumentstapel 1 aus dem Wertdokumentbehälter 81 entnommen und in die Wertdokumentkassette 40 eingelegt und, wenn der Wertdokumentbehälter 81 leer ist, weitere Wertdokumentstapel 1 aus dem Wertdokumentbehälter 82. Wenn die Wertdokumentkassette 40 voll befüllt ist, kann diese im Inneren der Vorrichtung automatisch verschlossen werden und anschließend aus der Vorrichtung 50 entfernt werden. Die restlichen Wertdokumente des Wertdokumentbehälters 81 können dann in eine leere Wertdokumentkassette eingelegt werden, die anschließend in die Kassetten-Aufnahmeeinrichtung 41 eingelegt wird. Falls die Wertdokumentkassette 40 in einem Geldautomaten eingesetzt werden soll, weisen die in die Wertdokumentkassette 40 eingelegten Wertdokumente üblicherweise alle dieselbe Denomination auf.

Desweiteren weist die Vorrichtung 50 eine zweidimensional verfahrbare Transporteinrichtung 55 auf, die in diesem Beispiel als x-y-Tisch ausgebildet ist. Damit kann die Greifeinrichtung 20 vertikal (y-Richtung) und horizontal (x-Richtung) bewegt werden, um einen Wertdokumentstapel 1 aus den Wertdokumentbehältern 81, 82 zu entnehmen, zu der Formatiereinrichtung 10 zu transportieren und den formatierten Wertdokumentstapel 1 von der Formatiereinrichtung 10 zu der Wertdokumentkassette 40 zu transportieren und ihn darin einzulegen.

Zusätzlich zu der Greifeinrichtung 20 ist an der Transporteinrichtung 55 eine weitere, nur vertikal verfahrbare Verfahreinrichtung 35 befestigt, die unabhängig von der Transporteinrichtung 55 vertikal (y-Richtung) verfahrbar ist. Am unteren Ende der Verfahreinrichtung 35 ist ein Fingerelement 30 angebracht, das beim Einlegen der Wertdokumentstapel 1 in die Wertdokumentkassette 40 verwendet wird. Das Fingerelement 30 kann mit Hilfe der Verfahreinrichtung 35 bereits vor dem Absenken der Greifeinrichtung 20 in die Wertdokumentkassette 40 abgesenkt werden, um einen in der Wertdokumentkassette 40 bereits vorhandenen Wertdokumentstapel zu halten oder zu stützen, bevor der Wertdokumentstapel 1 durch die Greifeinrichtung 20 eingelegt wird.

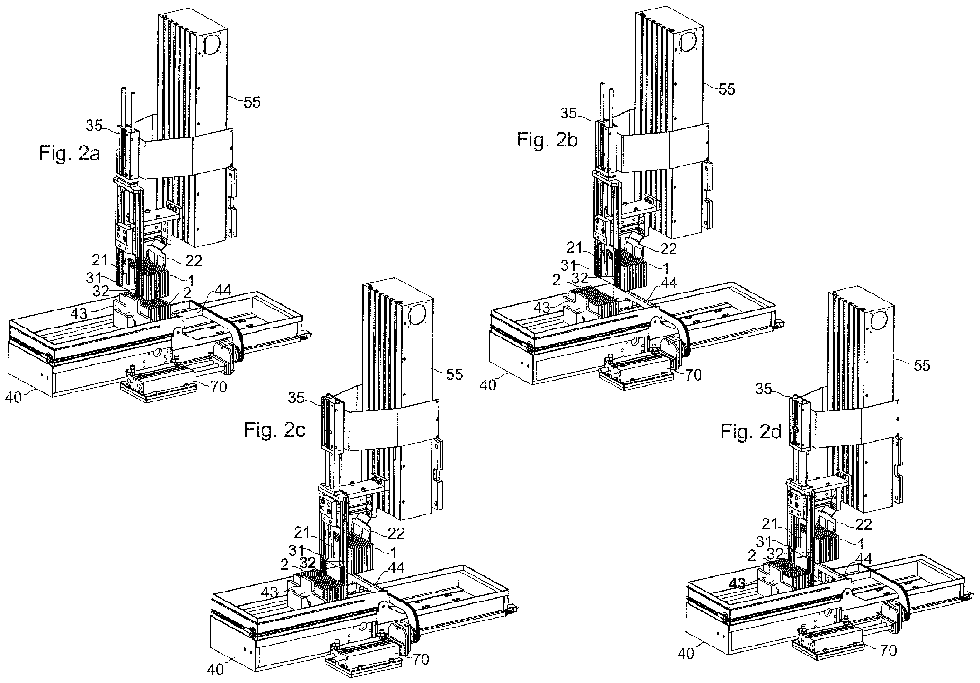

Das Fingerelement 30 wird z.B. im Fall einer Wertdokumentkassette 40 verwendet, die einen angefederten Hubboden 43 aufweist, auf dem der in der Kassette befindliche Wertdokumentstapel 2 aufliegt, vgl. Fig. 1. An der Kassettenoberseite, also gegenüberliegend zum Hubboden 43, ist an der Kassetten-Aufnahmeeinrichtung 41 ein Stützelement (Schieber 44) angebracht, das auf einen in der Wertdokumentkassette 40 befindlichen Wertdokumentstapel 2 mittels eines Stellglieds 70 zu bewegt wird und diesen entgegen der Federkraft des Hubbodens 43 bewegt, vgl. Fig. 2a. Der in der Kassette befindliche Wertdokumentstapel 2 wird zwischen dem angefederten Hubboden 43 und dem Schieber 44 gehalten.

Aber auch bei anders gestalteten Wertdokumentkassetten, die keinen angefederten Hubboden aufweisen, kann ein Fingerelement 30 zum Einlegen eines Wertdokumentstapels 1 vorteilhaft sein, um ein Aufbauschen oder ein Umfallen der Wertdokumente zu verhindern. Mit Hilfe des Fingerelements 30 kann ein in der Kassette befindlicher Wertdokumentstapel, bei dem die Wertdokumente auf ihrer Kante stehen, während der Zeit gestützt werden, in der ein Stützelement - für das Einlegen eines neuen Wertdokumentstapels - zeitweise von dem in der Kassette befindlichen Wertdokumentstapel entfernt wird.

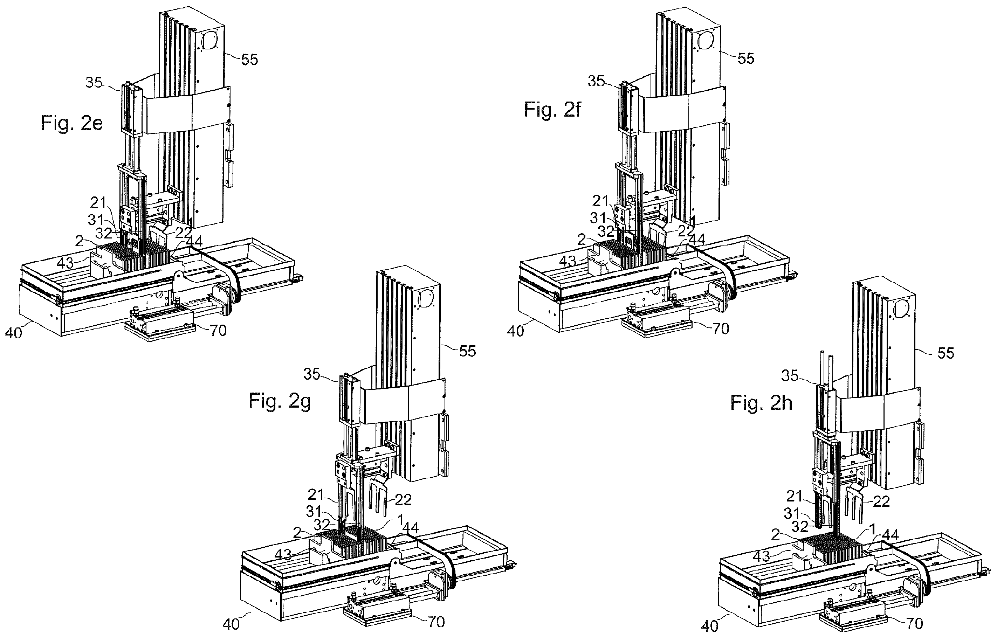

Bei Verwendung eines Fingerelements 30 werden zum Einlegen eines Wertdokumentstapels 1 in die Wertdokumentkassette 40 folgende Schritte nacheinander durchgeführt:
- Sofern die Wertdokumentkassette einen angefederten Hubboden 43 aufweist, auf dem der in der Kassette befindliche Wertdokumentstapel 2 aufliegt, wird der Hubboden 43 der Wertdokumentkassette durch den dem Hubboden gegenüberliegenden Schieber 44 soweit zurückgedrückt (nach links in Fig. 2a), dass Platz für den durch die Greifeinrichtung 20 neu einzulegenden Wertdokumentstapel 1 entsteht, vgl. Fig. 2b.
- Das Fingerelement 30, das in diesem Beispiel zwei Einzelfinger 31, 32 aufweist, wird mit Hilfe der Verfahreinrichtung 35 vertikal in die Wertdokumentkassette 40 abgesenkt, so dass es die Oberseite eines in der Wertdokumentkassette bereits befindlichen Wertdokumentstapels flächig berührt und die Position dieses Wertdokumentstapels 2 (ggf. gegen die Federkraft des Hubbodens 43) fixiert, vgl. Fig. 2c.
- Der Schieber 44, der den in der Kassette 40 befindlichen Wertdokumentstapel 2 gegen die Federkraft des Hubbodens 43 gehalten hat, wird anschließend von dem Wertdokumentstapel 2 weg bewegt. Die Haltefunktion des Schiebers 44 übernimmt nun zeitweise das Fingerelement 30, bis der Schieber 44 nach Einlegen des jeweiligen Wertdokumentstapels 1 diese Haltefunktion wieder übernimmt, vgl. Fig. 2d.
- Die Greifeinrichtung 20 (die in diesem Beispiel zwei Greifelemente 21, 22 aufweist) die den einzulegenden Wertdokumentstapel 1 hält, wird mit Hilfe der Transporteinrichtung 55 so in die Wertdokumentkassette 40 abgesenkt, dass sich das Fingerelement 31, 32 zwischen dem bereits in der Kassette befindlichen Wertdokumentstapel 2 und dem einzulegenden Wertdokumentstapel 1 befindet, vgl. Fig. 2e .
- Die Greifelemente 21, 22 der Greifeinrichtung 20 fahren auseinander, um den Wertdokumentstapel 1 loszulassen und dadurch in der Wertdokumentkassette 40 abzulegen, vgl. Fig. 2f. Etwa gleichzeitig fährt der Schieber 44 neben das Fingerelement 30 an den neu eingelegten Wertdokumentstapel 1 heran, um diesen wieder zu halten.
- Anschließend werden die Greifeinrichtung 20 und das Fingerelement 30 aus der Wertdokumentkassette 40 heraus vertikal nach oben bewegt, vgl. Fig. 2g, 2h. Im Fall eines Rollenfingers werden beim Hochfahren des Fingerelements 30 die Rollen des Fingerelements gedreht. Im Fall eines einfachen Fingers wird ggf. ein Niederhalter zum Zurückhalten der Wertdokumente verwendet.
- Nach dem Herausbewegen der Greifeinrichtung 20 und des Fingerelements 30 aus der Wertdokumentkassette 40 kann der Schieber 44 optional auf den neu eingelegten Wertdokumentstapel 1 zu bewegt werden, um diesen mit dem bereits in der Wertdokumentkassette befindlichen Wertdokumentstapel 2 zuzuschieben und die beiden Wertdokumentstapel 1, 2 miteinander zu vereinigen. Alternativ kann die Vereinigung der beiden Wertdokumentstapel 1, 2 auch durch die Elastizität der Wertdokumentstapel (Aufbauschen) quasi von selbst erfolgen.

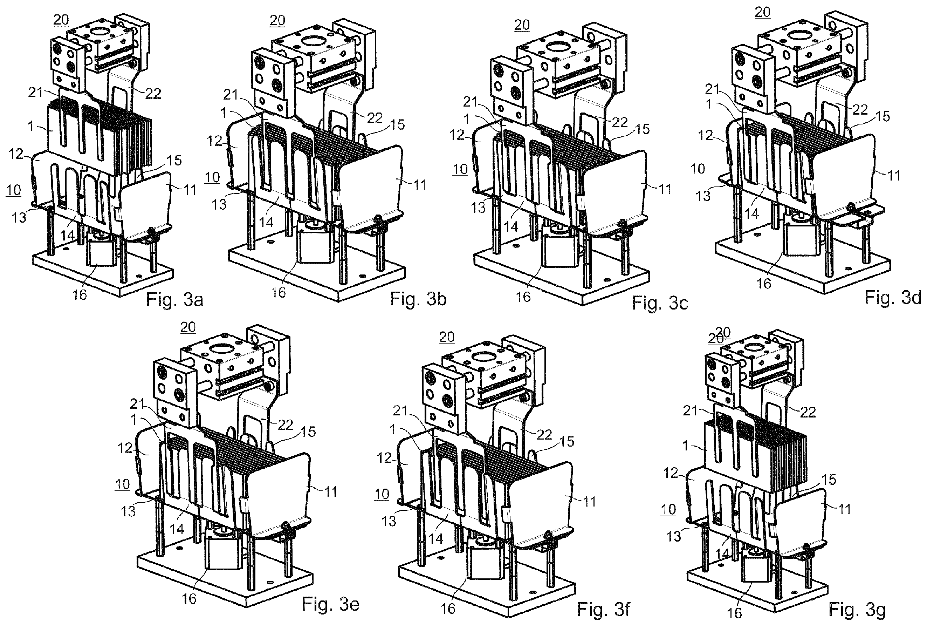

In Fig. 3a-g ist das Formatieren eines Wertdokumentstapels in der Formatiereinrichtung 10 gezeigt. Zur Aufnahme eines zu formatierenden Wertdokumentstapels 1 weist die Formatiereinrichtung 10 einen Boden 13 sowie zwei ortsfeste Seitenwände 14, 15 und zwei bewegliche Seitenwände 11, 12 auf. An ihrer dem Boden gegenüberliegenden Oberseite ist die Formatiereinrichtung offen, um den Wertdokumentstapel von oben einlegen zu können.

In Fig. 3a ist ein durch die Greifeinrichtung 20 aus dem Wertdokumentbehälter entnommener Wertdokumentstapel 1 dargestellt, der zwischen den Greifelementen 21, 22 gehalten wird. Die Greifeinrichtung 20 wurde zum Zeitpunkt der Fig. 3b nach unten bewegt, um den Wertdokumentstapel 1 auf dem Boden 13 der Formatiereinrichtung 10 abzulegen, so dass die Wertdokumente auf ihren Längskanten stehen. Anschließend fahren die beiden Greifelemente 21, 22 etwas auseinander, um den Wertdokumentstapel 1 loszulassen (Fig. 3c). Der Wertdokumentstapel 1 wird dann durch die ortsfesten Seitenwänden 14, 15 gestützt.

Zum Formatieren des Wertdokumentstapels werden die beweglichen Seitenwände 11, 12, die zum Zeitpunkt des Einlegens auseinander gefahren sind, mit Hilfe eines Motors 16 aufeinander zu bewegt bis der Abstand der beweglichen Seitenwände der Länge der Wertdokumente entspricht (Fig. 3d). Dabei werden die Kanten der Wertdokumente verschoben. Wenn die Positionen der Wertdokumentkanten aneinander angeglichen sind, d.h. die Wertdokumente aufeinander ausgerichtet sind, ist der Wertdokumentstapel formatiert. Vor der Entnahme des formatierten Wertdokumentstapels 1 werden die beweglichen Seitenwände voneinander entfernt (Fig. 3e). Anschließend fahren die Greifelemente 21, 22 wieder aufeinander zu, um den formatierten Wertdokumentstapel 1 zu greifen (Fig. 3f) und aus der Formatiereinrichtung 10 wieder zu entnehmen (Fig. 3g). Anschließend wird der formatierte Wertdokumentstapel 1 mit Hilfe der Greifeinrichtung 20 in die bereitgestellte Wertdokumentkassette 40 eingelegt.

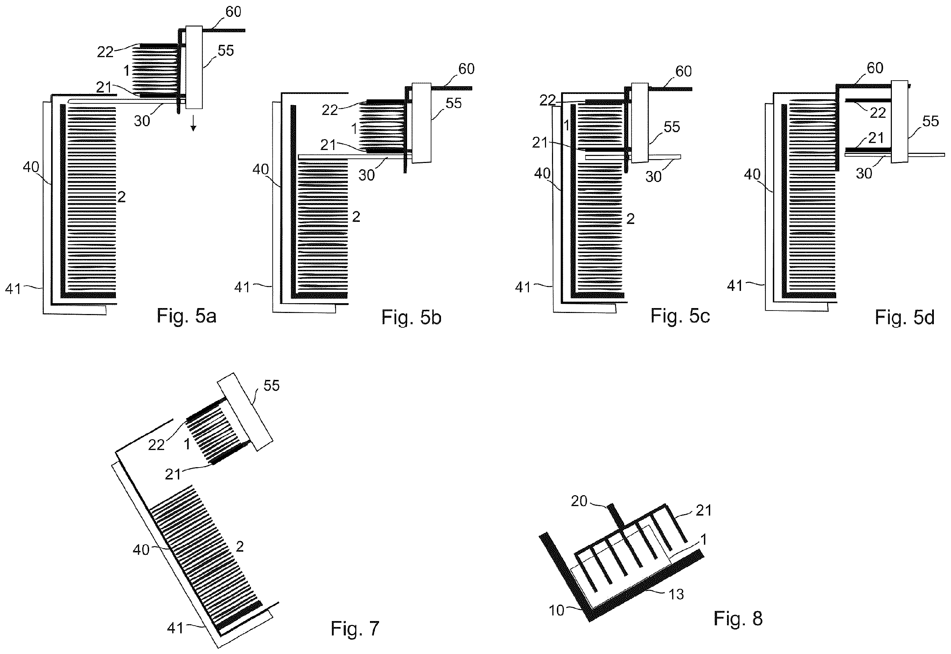

Fig. 8 zeigt ein weiteres Ausführungsbeispiel einer Formatiereinrichtung 10, die nur einen Boden und eine senkrecht zu diesem stehende Seitenwand aufweist. Der Boden 13 der Formatiereinrichtung 10 ist schräg zur Horizontalen ausgerichtet ist (z.B. mindestens 30°) und die Seitenwand ist an der tiefer liegenden Seite des Bodens angeordnet. Wenn die Greifeinrichtung 20 den Wertdokumentstapel 1 auf den Boden 13 auflegt und die Greifelemente 21, 22 geringfügig auseinander bewegt werden, um den Wertdokumentstapel 1 loszulassen, rutschen die Wertdokumente aufgrund der Schwerkraft entlang des Bodens 13 auf die Seitenwand zu und werden so an ihrer (in Fig. 8 linken) Kante ausgerichtet. Bei Bedarf kann das Rutschen des Wertdokumentstapels 1 auch durch Vibrieren oder Rütteln des schräg liegenden Bodens 13 und/oder der Seitenwand unterstützt werden.

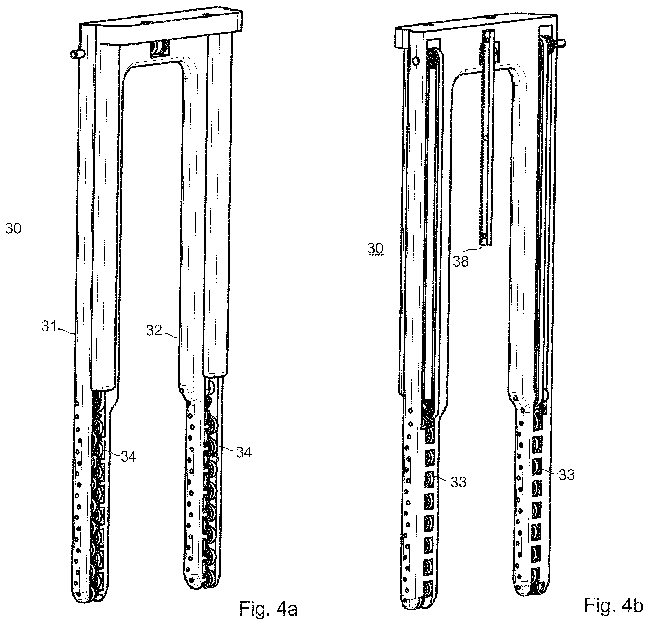

In Fig. 4a, b ist ein als Rollenfinger ausgebildetes Fingerelement 30 dargestellt, das in diesem Beispiel zwei Einzelfingern 31, 32 aufweist. Fig. 4a zeigt die Vorderseite und Fig. 4b die Rückseite des Rollenfingers. Sowohl auf der Vorderseite als auch auf der Rückseite weist der Rollenfinger an seinem Ende entlang seiner Längsrichtung jeweils eine Reihe von Rollen 33, 34 auf. Beim Einlegen eines Wertdokumentstapels in die Wertdokumentkassette befinden sich also auf der dem einzulegenden Wertdokumentstapel 1 zugewandten Seite des Rollenfingers eine erste Reihe von Rollen 34 und auf der Seite des Rollenfingers, die dem bereits in der Kassette befindlichen Wertdokumenten 2 zugewandt ist, eine zweite Reihe von Rollen 33. Um die Dicke des Rollenfingers gering zu halten werden Rollen mit geringem Durchmesser bevorzugt, z.B. mit höchstens einem Durchmesser von 1 cm. Die Anzahl der Rollen einer Rollenreihe beträgt mindestens 2.

Bevorzugt werden die Rollen 33, 34 beim Herausziehen des Fingerelements 30 aus der Wertdokumentkassette 40 aktiv gedreht, damit die Rollen auf der Oberfläche des stapelobersten Wertdokuments abrollen. Auf diese Weise wird die beim Herausziehen des Fingerelements entstehende Reibungskraft zwischen Fingerelement und den dem Fingerelement benachbarten Wertdokumenten sehr stark reduziert. Zusätzlich können die Rollen auch beim Absenken des Fingerelements in die Kassette 40 aktiv gedreht werden. Die Drehgeschwindigkeit der Rollen 33, 34 beim Herausziehen des Fingerelements 30 aus der Wertdokumentkassette ist vorzugsweise so gewählt, dass die Umfangsgeschwindigkeit der Rollen 33, 34 der Translationsgeschwindigkeit des Fingerelements bei seiner vertikale Bewegung nach oben entspricht. Es kann exakt dieselbe Geschwindigkeit gewählt werden oder die Rollen 33, 34 können beim Hochfahren des Fingerelements auch etwas schneller gedreht werden als das Fingerelement nach oben fährt. Die zur selben Rollenreihe gehörenden Rollen drehen sich mit derselben Geschwindigkeit und sind dazu z.B. miteinander mechanisch gekoppelt. Die Rollen 33, 34 der beiden Rollenreihen werden aber in einander entgegengesetzte Richtung gedreht (die Rollen 33 also entgegen den Rollen 34), damit die Rollen auf beiden Seiten des Fingerelements auf der Oberfläche der Wertdokumente abrollen. Die Rollen 33, 34 der beiden Rollenreihen können jeweils mechanisch an die Vertikalbewegung des Fingerelements 30 gekoppelt sein, z.B. mit Hilfe einer Zahnstange 38 (nur in Fig. 4a gezeigt), so dass die Rollen bei der Vertikalbewegung des Fingerelements 30 automatisch mit der richtigen Richtung und Geschwindigkeit mitgedreht werden, vgl. Fig. 4b.

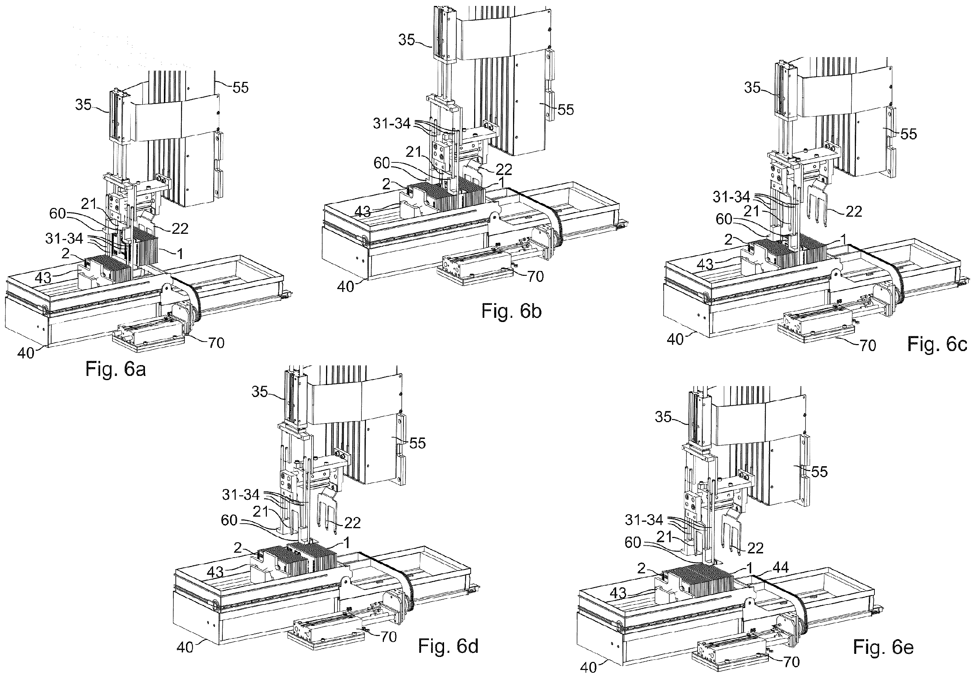

Fig. 6a-e zeigen ein Ausführungsbeispiel, bei dem als Fingerelement 30 vier vertikale Stangen verwendet werden, die mittels der Verfahreinrichtung 35 vertikal bewegbar sind. Zum Zurückhalten der Wertdokumente in der Wertdokumentkassette wird ein Niederhalter 60 verwendet, der zwei L-förmige Niederhalter-Elemente aufweist. Jeweils ein Niederhalter-Element 60 weist zwei vertikale Löcher auf, deren Querschnitt etwas größer ist als der Durchmesser der Stangen. Die beiden Löcher eines L-förmigen Niederhalter-Elements 60 umschließen zwei der vertikalen Stangen, so dass das jeweilige Niederhalter-Element entlang der beiden Stangen frei beweglich ist. In Fig. 6a sind die 4 Stangen mittels der Verfahreinrichtung 35 ganz nach unten gefahren worden, um den in der Wertdokumentkassette bereits befindlichen Wertdokumentstapel 2 zurückzuhalten. Die beiden L-förmigen Niederhalter-Elemente 60 liegen auf den Oberkanten der Wertdokumente des Wertdokumentstapels 1 auf, der in die Wertdokumentkassette 40 eingelegt werden soll. In Fig. 6b ist der Wertdokumentstapel 1 mittels der Greifelemente 21, 22 in die Wertdokumentkassette 40 abgesenkt worden. Da die beiden L-förmigen Niederhalter-Elemente 60 auf den Oberkanten der Wertdokumente des Wertdokumentstapels 1 aufliegen, rutschen die Niederhalter-Elemente 60 entlang der Stangen entsprechend nach unten nach, wenn der Wertdokumentstapel 1 mittels der Greifelemente 21, 22 nach unten bewegt wird. In Fig. 6c haben die Greifelemente 21, 22 den Wertdokumentstapel 1 wieder losgelassen und sind wieder nach oben bewegt worden. In Fig. 6d wurden die 4 Stangen mittels der Verfahreinrichtung 35 aus der Wertdokumentkassette 40 heraus nach oben gezogen und haben dabei die beiden L-förmigen Niederhalter-Elemente 60 mit nach oben genommen. Denn diese sind mit den 4 Stangen mechanisch über Stifte gekoppelt, die am unteren Ende der jeweiligen Stange aus der Stange seitlich herausragen und somit ein Herausrutschen der beiden L-förmigen Niederhalter-Elemente 60 am unteren Ende der Stangen vermeiden. In Fig. 6e sind die beiden Wertdokumentstapel 1 und 2 mittels eines Schiebers 44 zusammengeschoben worden und dadurch zu einem Stapel vereinigt. Alternativ zu den beiden L-förmigen Niederhalter-Elementen 60 kann auch ein einziges (breiteres) Niederhalter-Element 60 verwendet werden. An Stelle von 4 Stangen können auch 2 Stangen als Fingerelement 30 verwendet werden.

In Fig. 5a-d ist ein Ausführungsbeispiel gezeigt, bei dem die Wertdokumentkassette 40 vertikal in einer Kassetten-Aufnahmeeinrichtung 41 angeordnet ist und die Wertdokumente in der Wertdokumentkassette 40 aufeinander liegen. Bei diesem Ausführungsbeispiel wird ein Fingerelement 30 und einem Niederhalter 60 verwendet, die beide der an der Transporteinrichtung 55 der Greifeinrichtung 20 angebracht sind und unabhängig voneinander (und unabhängig von den Greifelementen 21, 22) relativ zur Transporteinrichtung 55 aktiv bewegbar sind. Das Fingerelement 30 ist z.B. einteilig und senkrecht zur Zeichenebene plattenförmig geformt. Bei dem Ausführungsbeispiel aus Fig. 5a-d wird des Fingerelement 30 zum Zusammendrücken eines in einer Wertdokumentkassette 40 befindlichen Wertdokumentstapels 2 verwendet, der sich aufbauscht. Der Niederhalter 60 weist z.B. zwei winkelförmige Niederhalter-Elemente auf, von denen sich eines in Fig. 5a-d vor den Greifelementen 21, 22 befindet und eines hinter diesen, so dass der Wertdokumentstapel 1 auf beiden Seiten der Greifelemente 21, 22 zurückgehalten wird, wenn die Greifelemente 21, 22 aus der Wertdokumentkassette 40 herausgezogen werden.

Der Wertdokumentstapel 1 wurde durch die Greifelemente 21, 22 der Greifeinrichtung 20 aus einem Wertdokumentbehälter 81 entnommen, der sich z.B. der Kassetten-Aufnahmeeinrichtung 41 befindet (in Fig. 5a-d nicht gezeigt). Optional können die Seitenkanten der Wertdokumente des entnommenen Wertdokumentstapels 1 in einer Formatiereinrichtung 10 ausgerichtet worden sein.

In Fig. 5a ist das Fingerelement 30, das sich direkt unter dem Greifelement 21 befindet, in die Wertdokumentkassette 40 eingeführt worden und dort über dem obersten Wertdokument des Wertdokumentstapels 2 platziert worden. Anschließend wird die Transporteinrichtung 55 nach unten bewegt (siehe Pfeil), um den sich aufbauschenden Wertdokumentstapel 2 mit Hilfe des Fingerelements 30 zusammenzudrücken (vgl. Fig. 5b). In Fig. 5c wurde die Transporteinrichtung 55 dann nach links bewegt, um den mit den Greifelementen 21, 22 gegriffenen Wertdokumentstapel 1 in den oberhalb des Fingerelements 30 entstandenen Freiraum im oberen Teil der Wertdokumentkassette 40 einzuführen. Der Niederhalter 60 wird ebenfalls nach links bewegt bis er an den Wertdokumentkanten beider Wertdokumentstapel 1, 2 anliegt. Die Greifelemente 21, 22 werden zum Loslassen des Wertdokumentstapels 1 etwas auseinander bewegt. Anschließend wird die Transporteinrichtung 55 nach rechts bewegt, um die Greifelemente 21, 22 aus der Wertdokumentkassette 40 herauszuziehen. Das Fingerelement 30 wird ebenfalls aus der Wertdokumentkassette 40 heraus (nach rechts) gezogen. Beim Herausziehen des Fingerelements 30 hält der Niederhalter 60 die Wertdokumente der beiden Wertdokumentstapel 1, 2, die in der Nähe des Fingerelements 30 liegen, in der Wertdokumentkassette 40, damit diese nicht durch Reibung mit dem Fingerelement 30 mit heraus gezogen werden, vgl. Fig. 5d.

Fig. 7 zeigt ein einfaches Ausführungsbeispiel, bei dem auf ein Fingerelement 30 verzichtet wird. Es kann zum Einsatz kommen, falls sich der Wertdokumentstapel nicht oder kaum aufbauscht, z.B. wenn dieser v.a. aus wenig gebrauchten oder druckfrischen Wertdokumenten besteht, und der Wertdokumentstapel 2 auch nicht durch einen angefederten Hubboden nach oben gedrückt wird. Auch auf einen Niederhalter 60 kann bei dem Ausführungsbeispiel aus Fig. 7 verzichtet werden. Um das Mitziehen von Wertdokumenten zu verhindern, ist bei dem Ausführungsbeispiel aus Fig. 7 die Wertdokumentkassette 40 in einer Kassetten-Aufnahmeeinrichtung 41 aufgenommen, in der die Wertdokumentkassette 40 schräg nach hinten geneigt ist, so dass der Wertdokumentstapel durch seine Schwerkraft sowohl gegen den Boden als auch gegen eine Rückwand der Wertdokumentkassette gedrückt wird. Im Vergleich zur vertikalen Anordnung der Wertdokumentkassette 40 kann der einzulegende Wertdokumentstapel einfach aufgrund seiner Schwerkraft von dem unteren Greifelement 21 herab gleiten und so in die Wertdokumentkassette 40 fallen gelassen werden. Im Vergleich zur horizontalen Anordnung der Wertdokumentkassette 40 ist die schräge Anordnung vorteilhaft, da das obere Ende des Wertdokumentstapels 2 aufgrund der Schwerkraft der Wertdokumente nicht gestützt zu werden braucht.

Bei Bedarf kann aber auch bei dem Ausführungsbeispiel der Fig. 7 ein Niederhalter 60 zum Zurückhalten der Wertdokumente beim Herausziehen der Greifelemente 21, 22 verwendet werden. Zusätzlich kann ein besonders reibungsarmes Material für die Greifelemente 21, 22 verwendet werden.

## Patentansprüche

1. Vorrichtung zum Befüllen einer Wertdokumentkassette (40), mit
- einer Kassetten-Aufnahmeeinrichtung (41) zur Aufnahme einer Wertdokumentkassette (40),
- eine Behälter-Aufnahmeeinrichtung (80) zur Aufnahme mindestens eines Wertdokumentbehälters,
- einer Greifeinrichtung (20) zum Greifen eines Wertdokumentstapels (1),
- eine Transporteinrichtung (55) zum Bewegen der Greifeinrichtung (20), die dazu ausgebildet ist, einen Wertdokumentstapel (1) mit Hilfe der Greifeinrichtung (20) aus einem in der Behälter-Aufnahmeeinrichtung (80) aufgenommenen Wertdokumentbehälter (81, 82) zu entnehmen und zu der in der Kassetten-Aufnahmeeinrichtung (41) aufgenommenen Wertdokumentkassette (40) zu transportieren und in die Wertdokumentkassette (40) einzulegen,
- ein, vorzugsweise verschließbares, Gehäuse (53), in dem die Behälter-Aufnahmeeinrichtung, die Kassetten-Aufnahmeeinrichtung und die Greifeinrichtung angeordnet sind,
- eine Steuereinrichtung (51) zur Steuerung der Vorrichtung, insbesondere zur Steuerung der Transporteinrichtung (55) und der Greifeinrichtung (20), die dazu ausgebildet ist, einen Wertdokumentstapel mit Hilfe der Greifeinrichtung aus einem in der Behälter-Aufnahmeeinrichtung aufgenommenen Wertdokumentbehälter zu entnehmen und mit Hilfe die Greifeinrichtung in eine in der Kassetten-Aufnahmeeinrichtung aufgenommene Wertdokumentkassette einzulegen.

2. Vorrichtung nach Anspruch 1, **dadurch gekennzeichnet, dass** die Vorrichtung, zusätzlich zu der Greifeinrichtung (20), ein Fingerelement (30) aufweist, das für das Einlegen des Wertdokumentstapels (1) in die Wertdokumentkassette (40) eingeführt wird, wobei das Fingerelement (30) insbesondere an der Transporteinrichtung (55) der Greifeinrichtung (20) oder an der Kassetten-Aufnahmeeinrichtung (41) angebracht ist.

3. Vorrichtung nach Anspruch 2, **dadurch gekennzeichnet, dass** die Vorrichtung eine Verfahreinrichtung (35) aufweist, mittels derer das Fingerelement (30), unabhängig von der Greifeinrichtung (20), verfahrbar ist, wobei die Verfahreinrichtung (35) insbesondere an der Transporteinrichtung (55) der Greifeinrichtung oder an der Kassetten-Aufnahmeeinrichtung (41) angebracht ist, wobei die Steuereinrichtung (51) dazu eingerichtet ist, die Verfahreinrichtung (35) derart zu steuern, dass das Fingerelement (30) in die Wertdokumentkassette (40) eingeführt wird und dabei am Ende eines in der Wertdokumentkassette (40) befindlichen Wertdokumentstapels (2) positioniert wird, so dass es die Oberseite des stapelobersten Wertdokuments des in der Wertdokumentkassette (40) befindlichen Wertdokumentstapels (2) flächig berührt.

4. Vorrichtung nach Anspruch 3, **dadurch gekennzeichnet, dass** die Steuereinrichtung (51) dazu ausgebildet ist, das Fingerelement (30) mit Hilfe der Verfahreinrichtung (35) in die Wertdokumentkassette (40) zu einem Zeitpunkt einzuführen, bevor die Greifeinrichtung (20) zum Einlegen eines Wertdokumentstapels in die Wertdokumentkassette eingeführt wird, um den in der Kassette bereits befindlichen Wertdokumentstapel durch das Fingerelement zu halten oder zu stützen und ggf. auch um diesen entgegen der Stapelrichtung zusammenzudrücken.

5. Vorrichtung nach einem der vorhergehenden Ansprüche, **dadurch gekennzeichnet, dass** das, vorzugsweise verschließbare, Gehäuse an seinem einer Bedienperson zugewandten Seite ein, vorzugsweise durchsichtiges, Fenster zum Einbringen und zur Entnahme von Wertdokumentbehältern und der Wertdokumentkassette aufweist, wobei die Greifeinrichtung vorzugsweise dazu ausgebildet ist, die Wertdokumente aus dem Wertdokumentbehälter erst zu entnehmen, nachdem das Gehäuse mit dem Fenster verschlossen wurde.

6. Vorrichtung nach einem der vorhergehenden Ansprüche, **dadurch gekennzeichnet, dass** die Vorrichtung einen Niederhalter (60) aufweist, der dazu eingerichtet ist, die Wertdokumente in der Wertdokumentkassette zurückzuhalten, wenn Greifelemente (21, 22) der Greifeinrichtung (20) aus der Wertdokumentkassette (40) herausgezogen werden, wobei der Niederhalter bei dem Herausziehen die Oberkanten zumindest derjenigen in der Wertdokumentkassette befindlichen Wertdokumente berührt, die in der Wertdokumentkassette (40) unmittelbar neben den Greifelementen vorhanden sind.

7. Vorrichtung nach einem der vorhergehenden Ansprüche, **dadurch gekennzeichnet, dass** die Kassetten-Aufnahmeeinrichtung (41) so ausgebildet ist, dass die in der Kassetten-Aufnahmeeinrichtung (41) aufgenommene Wertdokumentkassette (40) beim Einlegen der Wertdokumente schräg nach hinten geneigt ist.

8. Vorrichtung nach einem der vorhergehenden Ansprüche, **dadurch gekennzeichnet, dass** die Vorrichtung in dem, vorzugsweise verschließbaren, Gehäuse eine Formatiereinrichtung (10) zum automatischen Ausrichten eines Wertdokumentstapels (1) aufweist und die Transporteinrichtung (55) dazu ausgebildet ist, einen Wertdokumentstapel (1) mit Hilfe der Greifeinrichtung (20) von dem Wertdokumentbehälter (81, 82) zu der Formatiereinrichtung (10) und von der Formatiereinrichtung (10) zu der in der Kassetten-Aufnahmeeinrichtung (41) aufgenommenen Wertdokumentkassette (40) zu transportieren.

9. Vorrichtung nach Anspruch 8, **dadurch gekennzeichnet, dass** die Formatiereinrichtung (10) einen schräg zur Horizontalen ausgerichteten Boden (13) aufweist, auf den ein zu formatierender Wertdokumentstapel (1) aufliegen kann, wobei die Wertdokumente des in der Formatiereinrichtung eingelegten Wertdokumentstapels (1) mit ihren Kanten, vorzugsweise mit ihren Längskanten, auf dem Boden (13) der Formatiereinrichtung stehen.

10. Vorrichtung nach einem der Ansprüche 8 bis 9, **dadurch gekennzeichnet, dass** die Formatiereinrichtung (10) einen Sensor aufweist, um das Einlegen eines Wertdokumentstapels zu detektieren und das Ausrichten desselben automatisch zu starten, wobei vorzugsweise ein Rutschen des Wertdokumentstapels (1) entlang des schräg zur Horizontalen ausgerichteten Bodens (13) durch Vibrieren oder Rütteln des Bodens (13) unterstützt wird.

11. Vorrichtung nach einem der Ansprüche 8 bis 10, **dadurch gekennzeichnet, dass** die Formatiereinrichtung (10) zwei einander gegenüberliegende bewegliche Seitenwände (11, 12) aufweist, die gleichzeitig auf einen in der Formatiereinrichtung eingelegten Wertdokumentstapel (1) zu bewegt werden können, um die Positionen der Seitenkanten der Wertdokumente des Wertdokumentstapels (1) aneinander anzugleichen.

12. Vorrichtung nach einem der Ansprüche 8 bis 11, **dadurch gekennzeichnet, dass** die Behälter-Aufnahmeeinrichtung (80), die Kassetten-Aufnahmeeinrichtung (41) und die Formatiereinrichtung (10) in der Vorrichtung ortsfest sind und unmittelbar nebeneinander angeordnet sind, wobei die Formatiereinrichtung (10) vorzugsweise zwischen der Behälter-Aufnahmeeinrichtung (80) und der Kassetten-Aufnahmeeinrichtung (41) angeordnet ist.

13. Vorrichtung nach Anspruch 12, **dadurch gekennzeichnet, dass** die Greifeinrichtung (20) über der Anordnung der Behälter-Aufnahmeeinrichtung (80), der Kassetten-Aufnahmeeinrichtung (41) und der Formatiereinrichtung (10) angeordnet ist und die Steuereinrichtung (51) und die Transporteinrichtung (55) dazu ausgebildet sind, die Greifeinrichtung (20) so zu bewegen, dass mehrere Wertdokumentstapel (1) nacheinander aus dem Wertdokumentbehälter (81, 82) zu der Formatiereinrichtung (10) und von der Formatiereinrichtung zur Wertdokumentkassette (40) transportiert werden.

14. Vorrichtung nach einem der vorhergehenden Ansprüche, **dadurch gekennzeichnet, dass** die Greifeinrichtung (20) dazu ausgebildet ist, zuerst nacheinander mehrere Wertdokumentstapel aus dem in der Behälteraufnahme (80) angeordneten Wertdokumentbehälter (81) zu entnehmen und in die Wertdokumentkassette (40) einzulegen und, wenn der in der Behälteraufnahme angeordnete Wertdokumentbehälter (81) leer ist, weitere Wertdokumentstapel aus einem anderen, insbesondere aus einem neben dem entleerten Behälter in der Behälteraufnahme (80) angeordneten, Wertdokumentbehälter (82) zu entnehmen und in die Wertdokumentkassette (40) einzulegen.

15. Verfahren zum Befüllen einer Wertdokumentkassette (40), mit Hilfe der Vorrichtung nach einem der vorhergehenden Ansprüche, **dadurch gekennzeichnet, dass** für mehrere Wertdokumentstapel (1) nacheinander jeweils folgende Schritte durchgeführt werden:
a) Entnehmen des jeweiligen Wertdokumentstapels (1) aus einem Wertdokumentbehälter (81, 82) durch die Greifeinrichtung (20),
b) optionales Formatieren des Wertdokumentstapels (1), wobei der jeweilige aus dem Wertdokumentbehälter entnommene Wertdokumentstapel (1) durch die Greifeinrichtung (20) in eine Formatiereinrichtung (10) eingelegt wird, in der Formatiereinrichtung formatiert wird und anschließend durch die Greifeinrichtung (20) aus der Formatiereinrichtung (10) wieder entnommen wird,
c) Einlegen des durch die Greifeinrichtung (20) entnommenen Wertdokumentstapels in eine in der Kassetten-Aufnahmeeinrichtung aufgenommene Wertdokumentkassette (40),
wobei die Schritte a)-c) für mehrere Wertdokumentstapel (1), die in demselben Wertdokumentbehälter oder in verschiedenen Wertdokumentbehältern (81, 82) enthalten sind, wiederholt werden.

## Claims

1. Device for filling a valuable document cassette (40), having
- a cassette receptacle unit (41) for receiving a valuable document cassette (40),
- a container receptacle unit (80) for receiving at least one valuable document container,
- a gripping unit (20) for gripping a valuable document stack (1),
- a transport unit (55) for moving the gripping unit (20), which is designed to, with the aid of the gripping unit (20), retrieve a valuable document stack (1) from a valuable document container (81, 82) received in the container receptacle unit (80) and to transport said valuable document stack to the valuable document cassette (40) received in the cassette receptacle unit (41), and to insert said valuable document stack into the valuable document cassette (40),
- a preferably closable housing (53) in which the container receptacle unit, the cassette receptacle unit and the gripping unit are disposed,
- a control unit (51) for controlling the device, in particular for controlling the transport unit (55) and the gripping unit (20), which is designed to, with the aid of the gripping unit, retrieve a valuable document stack from a valuable document container received in the container receptacle unit and, with the aid of the gripping unit, to insert said valuable document stack into a valuable document cassette received in the cassette receptacle unit.

2. Device according to Claim 1, **characterized in that** the device has, in addition to the gripping unit (20), a finger element (30) which for inserting the valuable document stack (1) is introduced into the valuable document cassette (40), wherein the finger element (30) is in particular attached to the transport unit (55) of the gripping unit (20) or to the cassette receptacle unit (41).

3. Device according to Claim 2, **characterized in that** the device has a displacement unit (35) by means of which the finger element (30) is displaceable independently of the gripping unit (20), wherein the displacement unit (35) is in particular attached to the transport unit (55) of the gripping unit or to the cassette receptacle unit (41), wherein the control unit (51) is specified to control the displacement unit (35) in such a manner that the finger element (30) is introduced into the valuable document cassette (40) and in the process is positioned at the end of a valuable document stack (2) located in the valuable document cassette (40) so that said finger element touches in a planar manner the upper side of the uppermost valuable document of the stack of the valuable document stack (2) located in the valuable document cassette (40).

4. Device according to Claim 3, **characterized in that** the control unit (51) is designed to, with the aid of the displacement unit (35), introduce the finger element (30) into the valuable document cassette (40) at a point in time before the gripping unit (20) is introduced into the valuable document cassette for inserting a valuable document stack, so as to hold or support the valuable document stack already located in the cassette by the finger element and optionally also to compress said valuable document stack counter to the stacking direction.

5. Device according to one of the preceding claims, **characterized in that** the preferably closable housing has, on its side facing an operator, a preferably transparent window for introducing and retrieving valuable document containers and the valuable document cassette, wherein the gripping unit is preferably designed to retrieve the valuable documents from the valuable document container only after the housing has been closed with the window.

6. Device according to one of the preceding claims, **characterized in that** the device has a hold-down device (60) which is specified to retain the valuable documents in the valuable document cassette when gripping elements (21, 22) of the gripping unit (20) are extracted from the valuable document cassette (40), wherein the hold-down device during extraction touches the upper edges of at least those valuable documents located in the valuable document cassette that are present in the valuable document cassette (40) directly next to the gripping elements.

7. Device according to one of the preceding claims, **characterized in that** the cassette receptacle unit (41) is designed in such a way that the valuable document cassette (40) received in the cassette receptacle unit (41) is inclined obliquely to the rear when the valuable documents are being inserted.

8. Device according one of the preceding claims, **characterized in that** the device has, in the preferably closable housing, a formatting unit (10) for automatically aligning a valuable document stack (1), and the transport unit (55) is designed to, with the aid of the gripping unit (20), transport a valuable document stack (1) from the valuable document container (81, 82) to the formatting unit (10) and from the formatting unit (10) to the valuable document cassette (40) received in the cassette receptacle unit (41).

9. Device according to Claim 8, **characterized in that** the formatting unit (10) has a base (13) which is aligned obliquely to the horizontal and on which a valuable document stack (1) to be formatted can bear, wherein the valuable documents of the valuable document stack (1) inserted into the formatting unit rest on the base (13) of the formatting unit by way of their edges, preferably by way of their longitudinal edges.

10. Device according to one of Claims 8 to 9, **characterized in that** the formatting unit (10) has a sensor in order to detect the insertion of a valuable document stack and to automatically start the alignment thereof, wherein preferably slipping of the valuable document stack (1) along the base (13) aligned obliquely to the horizontal is assisted by vibrating or agitating the base (13).

11. Device according to one of Claims 8 to 10, **characterized in that** the formatting unit (10) has two movable lateral walls (11, 12) which lie opposite one another and can be moved simultaneously towards a valuable document stack (1) inserted into the formatting unit, so as to mutually adapt the positions of the lateral edges of the valuable documents of the valuable document stack (1).

12. Device according to one of Claims 8 to 11, **characterized in that** the container receptacle unit (80), the cassette receptacle unit (41) and the formatting unit (10) are stationary in the device and are disposed directly next to one another, wherein the formatting unit (10) is preferably disposed between the container receptacle unit (80) and the cassette receptacle unit (41).

13. Device according to Claim 12, **characterized in that** the gripping unit (20) is disposed above the assembly of the container receptacle unit (80), the cassette receptacle unit (41) and the formatting unit (10), and the control unit (51) and the transport unit (55) are designed to move the gripping unit (20) in such a way that a plurality of valuable document stacks (1) are transported successively from the valuable document container (81, 82) to the formatting unit (10) and from the formatting unit to the valuable document cassette (40).

14. Device according one of the preceding claims, **characterized in that** the gripping unit (20) is designed to first successively retrieve a plurality of valuable document stacks from the valuable document container (81) disposed in the container receptacle (80) and to insert them into the valuable document cassette (40) and, when the valuable document container (81) disposed in the container receptacle is empty, to retrieve further valuable document stacks from another container, in particular from a valuable document container (82) disposed next to the empty container in the container receptacle (80), and to insert them into the valuable document cassette (40).

15. Method for filling a valuable document cassette (40) with the aid of the device according to one of the preceding claims, **characterized in that** for a plurality of valuable document stacks (1) the following steps are in each case carried out successively:
a) retrieving the respective valuable document stack (1) from a valuable document container (81, 82) by the gripping unit (20),
b) optionally formatting the valuable document stack (1), wherein the respective valuable document stack (1) retrieved from the valuable document container is inserted into a formatting unit (10) by the gripping unit (20), is formatted in the formatting unit, and is subsequently retrieved from the formatting unit (10) again by the gripping unit (20),
c) inserting the valuable document stack retrieved by the gripping unit (20) into a valuable document cassette (40) received in the cassette receptacle unit,
wherein steps a)-c) are repeated for a plurality of valuable document stacks (1) that are contained in the same valuable document container or in different valuable document containers (81, 82).

## Revendications

1. Dispositif pour remplir une cassette de documents de valeur (40), avec
- un appareil de réception de cassette (41) pour recevoir une cassette de documents de valeur (40),
- un appareil de réception de contenant (80) pour recevoir au moins un contenant de documents de valeur,
- un appareil de saisie (20) pour saisir une pile de documents de valeur (1),
- un appareil de transport (55) pour déplacer l'appareil de saisie (20), qui est configuré pour prélever une pile de documents de valeur (1) d'un contenant de documents de valeur (81, 82) reçu dans l'appareil de réception de contenant (80) à l'aide de l'appareil de saisie (20) et la transporter jusqu'à la cassette de documents de valeur (40) reçue dans l'appareil de réception de cassette (41) et l'insérer dans la cassette de documents de valeur (40),
- un boîtier (53) de préférence refermable, dans lequel sont disposés l'appareil de réception de contenant, l'appareil de réception de cassette et l'appareil de saisie,
- un appareil de commande (51) pour commander le dispositif, en particulier pour commander l'appareil de transport (55) et l'appareil de saisie (20), qui est configuré pour prélever une pile de documents de valeur d'un contenant de documents de valeur reçu dans l'appareil de réception de contenant à l'aide de l'appareil de saisie et l'insérer dans une cassette de documents de valeur reçue dans l'appareil de réception de cassette à l'aide de l'appareil de saisie.

2. Dispositif selon la revendication 1, **caractérisé en ce que** le dispositif comporte, en plus de l'appareil de saisie (20), un élément de doigt (30) qui est introduit dans la cassette de documents de valeur (40) pour l'insertion de la pile de documents de valeur (1), l'élément de doigt (30) étant monté en particulier sur l'appareil de transport (55) de l'appareil de saisie (20) ou sur l'appareil de réception de cassette (41).

3. Dispositif selon la revendication 2, **caractérisé en ce que** le dispositif comporte un appareil de déplacement (35), au moyen duquel l'élément de doigt (30) peut être déplacé indépendamment de l'appareil de saisie (20), l'appareil de déplacement (35) étant monté en particulier sur l'appareil de transport (55) de l'appareil de saisie ou sur l'appareil de réception de cassette (41), l'appareil de commande (51) étant mis au point pour commander l'appareil de déplacement (35) de telle manière que l'élément de doigt (30) est introduit dans la cassette de documents de valeur (40) et est positionné à l'extrémité d'une pile de documents de valeur (2) se trouvant dans la cassette de documents de valeur (40), de telle sorte qu'il touche à plat le côté supérieur du document de valeur le plus haut dans la pile de la pile de documents de valeur (2) se trouvant dans la cassette de documents de valeur (40).

4. Dispositif selon la revendication 3, **caractérisé en ce que** l'appareil de commande (51) est configuré pour introduire l'élément de doigt (30) dans la cassette de documents de valeur (40) à l'aide de l'appareil de déplacement (35) à un moment précédant l'introduction de l'appareil de saisie (20) pour insérer une pile de documents de valeur dans la cassette de documents de valeur, afin de maintenir ou de soutenir la pile de documents de valeur se trouvant déjà dans la cassette par l'élément de doigt et éventuellement afin de la comprimer à l'encontre de la direction d'empilement.

5. Dispositif selon l'une des revendications précédentes, **caractérisé en ce que** le boîtier, de préférence refermable, comporte, sur son côté tourné vers un opérateur, une fenêtre, de préférence transparente, pour introduire et prélever des contenants de documents de valeur et de la cassette de documents de valeur, l'appareil de saisie étant de préférence configuré pour prélever les documents de valeur du contenant de documents de valeur seulement après la fermeture du boîtier par la fenêtre.

6. Dispositif selon l'une des revendications précédentes, **caractérisé en ce que** le dispositif comporte un serre-flan (60) qui est mis au point pour retenir les documents de valeur dans la cassette de documents de valeur, lorsque des éléments de saisie (21, 22) de l'appareil de saisie (20) sont extraits de la cassette de documents de valeur (40), le serre-flan touchant, lors de l'extraction, les bords supérieurs d'au moins ceux des documents de valeur se trouvant dans la cassette de documents de valeur, qui sont présents dans la cassette de documents de valeur (40) directement à côté des éléments de saisie.

7. Dispositif selon l'une des revendications précédentes, **caractérisé en ce que** l'appareil de réception de cassette (41) est configuré de telle sorte que la cassette de documents de valeur (40) reçue dans l'appareil de réception de cassette (41) est inclinée en biais vers l'arrière lors de l'insertion des documents de valeur.

8. Dispositif selon l'une des revendications précédentes, **caractérisé en ce que** le dispositif comporte dans le boîtier, de préférence refermable, un appareil de formatage (10) pour orienter automatiquement une pile de documents de valeur (1) et l'appareil de transport (55) est configuré pour transporter une pile de documents de valeur (1) à l'aide de l'appareil de saisie (20) depuis le contenant de documents de valeur (81, 82) vers l'appareil de formatage (10) et depuis l'appareil de formatage (10) vers la cassette de documents de valeur (40) reçue dans l'appareil de réception de cassette (41).

9. Dispositif selon la revendication 8, **caractérisé en ce que** l'appareil de formatage (10) comporte un fond (13) orienté obliquement par rapport à l'horizontale, sur lequel peut reposer une pile de documents de valeur (1) à formater, les documents de valeur de la pile de documents de valeurs (1) insérés dans l'appareil de formatage se tenant par leurs bords, de préférence par leurs bords longitudinaux, sur le fond (13) de l'appareil de formatage.

10. Dispositif selon l'une des revendications 8 à 9, **caractérisé en ce que** l'appareil de formatage (10) comporte un capteur pour détecter l'insertion d'une pile de documents de valeur et pour lancer automatiquement l'orientation de celle-ci, de préférence un glissement de la pile de documents de valeur (1) le long du fond (13) orienté obliquement par rapport à l'horizontale étant assisté par vibration ou agitation du fond (13).

11. Dispositif selon l'une des revendications 8 à 10, **caractérisé en ce que** l'appareil de formatage (10) comporte deux parois latérales mobiles (11, 12) opposées, qui peuvent être déplacées simultanément vers une pile de documents de valeur (1) insérée dans l'appareil de formatage pour aligner les positions des bords latéraux des documents de valeur de la pile de documents de valeur (1).

12. Dispositif selon l'une des revendications 8 à 11, **caractérisé en ce que** l'appareil de réception de contenant (80), l'appareil de réception de cassette (41) et l'appareil de formatage (10) sont fixes dans le dispositif et sont disposés directement côte à côte, l'appareil de formatage (10) étant disposé de préférence entre l'appareil de réception de contenant (80) et l'appareil de réception de cassette (41).

13. Dispositif selon la revendication 12, **caractérisé en ce que** l'appareil de saisie (20) est disposé au-dessus de l'agencement de l'appareil de réception de contenant (80), de l'appareil de réception de cassette (41) et de l'appareil de formatage (10), et l'appareil de commande (51) et l'appareil de transport (55) sont configurés pour déplacer l'appareil de saisie (20) de telle sorte que plusieurs piles de documents de valeur (1) sont transportées successivement depuis le contenant de documents de valeur (81, 82) vers l'appareil de formatage (10) et depuis l'appareil de formatage vers la cassette de documents de valeur (40).

14. Dispositif selon l'une des revendications précédentes, **caractérisé en ce que** l'appareil de saisie (20) est configuré pour prélever d'abord successivement plusieurs piles de documents de valeur du contenant de documents de valeur (81) disposé dans le logement de contenant (80) et pour les insérer dans la cassette de documents de valeur (40) et pour, lorsque le contenant de documents de valeur (81) disposé dans le logement de contenant est vide, prélever d'autres piles de documents de valeur d'un autre, en particulier d'un contenant de documents de valeur (82) disposé à côté du contenant vidé dans le logement de contenant (80), et les insérer dans la cassette de documents de valeur (40).

15. Procédé de remplissage d'une cassette de documents de valeur (40) à l'aide du dispositif selon l'une des revendications précédentes, **caractérisé en ce que** des étapes suivantes sont exécutées respectivement successivement pour plusieurs piles de documents de valeur (1) :
a) prélèvement de la pile de documents de valeur (1) respective d'un contenant de documents de valeur (81, 82) par l'appareil de saisie (20),
b) éventuellement formatage de la pile de documents de valeur (1), la pile de documents de valeur (1) respective prélevée du contenant de documents de valeur étant insérée par l'appareil de saisie (20) dans un appareil de formatage (10), étant formatée dans l'appareil de formatage et puis étant prélevée de l'appareil de formatage (10) par l'appareil de saisie (20),
c) insertion de la pile de documents de valeur prélevée par l'appareil de saisie (20) dans une cassette de documents de valeur (40) reçue dans l'appareil de réception de cassette,
les étapes a) à c) étant répétées pour plusieurs piles de documents de valeur (1), qui sont contenues dans le même contenant de documents de valeur ou dans différents contenants de documents de valeur (81, 82).
